Europäisches Patentamt

European Patent Office

Office européen des brevets

(19)

(11) **EP 1 342 134 B1**

(12) **EUROPEAN PATENT SPECIFICATION**

(45) Date of publication and mention
of the grant of the patent:
**01.06.2005 Bulletin 2005/22**

(51) Int Cl.⁷: **G05B 9/02**

(86) International application number:
**PCT/GB2001/005020**

(21) Application number: **01999862.4**

(22) Date of filing: **15.11.2001**

(87) International publication number:
**WO 2002/046848 (13.06.2002 Gazette 2002/24)**

(54) **TRACKING SYSTEMS FOR DETECTING SENSOR ERRORS**

ÜBERWACHUNGSSYSTEME ZUM ERKENNEN VON SENSORENFEHLERN

SYSTEMES DE POURSUITE DESTINES A DETECTER LES ERREURS DE CAPTEURS

(84) Designated Contracting States:
**AT BE CH CY DE DK ES FI FR GB GR IE IT LI LU
MC NL PT SE TR**

(30) Priority: **06.12.2000 GB 0029760**

(43) Date of publication of application:
**10.09.2003 Bulletin 2003/37**

(73) Proprietor: **Qinetiq Limited
London, SW1E 6PD (GB)**

(72) Inventors:
• **DADD, Graham, John, c/o QinetiQ Limited
Farnborough, Hampshire GU14 0LX (GB)**
• **GRIBBLE, Jeremy, John, c/o QinetiQ Limited
Farnborough GU14 0LX (GB)**

(74) Representative: **Obee, Robert William
IP QinetiQ Formalities,
A4 Bldg,
Ively Road
Farnborough, Hampshire GU14 0LX (GB)**

(56) References cited:
**GB-A- 2 345 343**       **US-A- 5 764 509**
**US-A- 5 819 188**       **US-A- 6 016 465**
**US-A- 6 063 129**

**Description**

This invention relates to tracking systems for detecting errors in the outputs of sensors monitoring a plurality of machine parameters, and is concerned more particularly, but not exclusively, with such tracking systems for detecting abnormal drift errors in sensors of gas turbine engines.

Sensors are mounted on gas turbine engines for the purposes of health monitoring and control. Since no sensor can be perfectly accurate, a practical control or health monitoring system will always be designed to tolerate the small amount of inaccuracy that is present during normal operation of such sensors. However, should the sensor inaccuracy increase beyond normal bounds (perhaps because the sensor is beginning to fail), then this may have serious safety or economic consequences for the operator of the equipment. Therefore, it is important to be able to detect abnormal sensor drift in operation.

Many schemes have been proposed for detecting abnormal sensor inaccuracy. These schemes can be broadly divided into two categories depending on whether they are based on hardware redundancy or analytical redundancy. Hardware redundancy is based on the use of multiple sensors to measure the same engine parameter. For example, the comparison of two sensors will serve to detect a single failure, but three or more sensors in conjunction with appropriate logic (such as a two-out-of-three majority voting scheme) are necessary to isolate the fault, that is to be able to say which sensor has failed. Schemes based on analytical redundancy use a simulation model of the system programmed to run in real-time on a digital computer. The simulation model provides a link between different engine parameters, allowing the values of such parameters to be checked against each other for consistency, without the use of duplicate hardware. Alternatively, for a given level of required system reliability, the use of analytical redundancy may reduce the level of hardware redundancy required, and hence reduces the overall costs of the operator while assuring the original system integrity. For example, the simulation could be used as the third vote to discriminate between two different sensor readings to identify a sensor that is failing.

Conventional engine controllers are designed on the assumption that a 'fixed' or 'standard' engine represents all engines of a given type. Often a fixed computer model of this standard engine is used to determine a control regime which achieves a number of guaranteed performance criteria. The controller is therefore designed for this fixed model, whose performance characteristics are assumed not to vary with time.

The performance of every engine however, is different because of, for example, build differences and tolerance variations in each individual engine. Additionally, as an engine ages, its performance degrades causing performance measures such as specific fuel consumption to decline. Engine deterioration through wear and damage therefore causes each engine to change in a time varying sense. Another source of time-dependent performance change is heat soakage; that is the rematching of the engine due to thermal change of blade tip and seal clearances which affects compressor and turbine efficiencies. These latter effects, which have slow dynamics, are reversible. Inevitably therefore, a number of compromises have to be made when designing controllers for a fixed model of gas turbine engine. Although the modelling differences between the actual engine and the fixed model tend to be small, they are significant when compared with the tolerable sensor inaccuracies. These small differences will lead to significant losses, for example, in fuel consumption, when used to determine optimum control. Corresponding gains can therefore be made if optimum control is obtained for the individual engine.

It is therefore advantageous if a suitable engine controller can use information pertaining to engine variation during the engine's operating life to obtain optimum performance levels by choice of suitable engine control data. It is estimated that control optimisation using a varying model, depending on applied demands, would enable a benefit in, for example, specific fuel consumption of the order of a 0.5-1% reduction, and a 17°C benefit in reduction of hot end temperature. Gains of this scale would be costly and hard won through other developmental approaches such as improved turbomachinery design. In fact, additional control and heat management system complexity for improvements in specific fuel consumption as small as 0.1% are not uncommon on large civil aero-engines.

As far as optimisation of performance is concerned, the conventional control mode in which the engine is operating is normally fixed and represents a compromise between economic operation, performance and engine life. For example, for an aircraft when cruising at altitude, it is known to be desirable to reduce either fuel burn, for economy, or turbine temperature so as to conserve engine life, but the inflexibility of conventional controllers will inhibit this.

It is known that models which track actual engine performance are useful in providing an optimising control strategy. Such systems are described in the paper "Subsonic Flight Test Evaluation of a Propulsion System Parameter Estimation Process for the F100 Engine" by J.S. Orme et al. published by the American Institute of Aeronautics and Astronautics AIAA-92-3745, and in NASA technical memorandum 104233 "A Simulation Study of Turbofan Engine Deterioration Estimation Techniques Using Kalman Filtering Techniques" by H.H. Lambert. The optimisation described therein is performed on a computer model of the engine and not on the engine itself. The aim of these tracking models is to use changes in sensor readings obtained from the engine at particular operating points to estimate changes in engine component performance, that is, to calculate so called "deterioration parameters", which are also alternatively and hereinafter referred to as "performance parameters". These parameters are, for example, efficiencies or flow ca-

**EP 1 342 134 B1**

pacities of turbines or compressors. Changes in performance parameters when incorporated into a computer model take the form of correction terms which, when input to such models, should result in computation of identical model sensor output changes as those readings from the actual engine at a particular operating point. When this is achieved the model is said to match or track the engine successfully. The model is usually a real-time thermodynamic model of the engine which typically, in addition to the normal parameters such as fuel, guide vane and nozzle actuator positions, incorporates a further set of variables which represent these performance parameter changes. However, this approach to optimisation can only be effective when the system sensors are known to be reading within the tolerable accuracy levels.

The choice of the engine sensor outputs which the model uses to track is very important. They should give a broad measure of the condition of the engine so that, when both sets of engine and model outputs are equal, there is a reasonable level of confidence that the model is a good representation of the engine. This means that the sensors used must be widely distributed in terms of their mathematical independence.

Tracked models can be exploited practically to obtain control data which will maintain optimal efficiency for a certain required performance, for example, specific fuel consumption. In addition, a knowledge of the change in component performance parameters is useful in monitoring degradation and its distribution within the engine, and to investigate suitable maintenance action.

The success of the model used for optimisation is crucially dependent on how well the model matches the engine since, as mentioned, the performance of every engine is different because of manufacturing tolerances, and will in any case deteriorate throughout the engine's operational life. Engine component performance parameters are not directly measurable with engine control instrumentation but changes in their value can be estimated using prior knowledge of how such changes affect changes in engine sensor outputs at a particular operating point.

US 6063129 discloses a system for tracking the performance of an engine, such as a gas turbine jet aero-engine, which produces a real-time computer model which, from changes in the readings from the output sensors of the engine, follows changes in the performance parameters of the engine, such as the efficiencies of the turbines and compressors. The system is capable of accurately tracking the engine performance even when the number of sensors used is not equal to the number of performance parameters to be tracked, and utilises at least one predetermined non-square efficiency coefficient matrix C relating hypothetical changes in sensor outputs to performance parameter variation to determine estimated changes in performance parameters. This is done by calculating a pseudoinverse of the matrix **C** using a matrix method incorporating the technique of single value decomposition (SVD). It will be appreciated that the accuracy of such a tracking system depends on the accuracy of the sensor outputs, and that such accuracy will be compromised in the event of an abnormal sensor error, for example as a result of drift or sensor failure.

It is an object of the invention to provide a novel tracking system which uses analytical redundancy to track errors in engine output sensors. In this regard a distinction needs to be made between drift and outright failure in that the latter is generally relatively easy to determine whereas drift is much more difficult to determine. Until drift increases to a level at which it can easily be distinguished from background noise due to component variation, it can only be detected by use of the special measures described below. However, although this novel tracking system was initially devised for use with gas turbine engines, it is important to appreciate that the tracking system can also be applied to any other equipment exhibiting similar salient characteristics to gas turbine engines.

According to one aspect of the present invention there is provided a tracking system for detecting errors in the outputs of sensors monitoring a plurality of parameters of a machine, the system comprising:

(a) simulation means providing a real-time computer model of the machine having control inputs for receiving control signals corresponding to control signals supplied to the machine in operation, and outputs for supplying estimated sensor output values $\mathbf{y}_{est}$;

(b) compensating means for producing estimated machine performance variation values $\delta\mathbf{p}_{est}$ for supplying to the simulation means;

(c) memory means containing reference information indicative of the machine performance variation in response to hypothetical changes in the sensor output signals; and

(d) sensor error estimating means for producing estimated sensor output error values $\mathbf{z}_{est}$ in dependence on the estimated machine performance variation values $\delta\mathbf{p}_{est}$ and the reference information.

Such an error tracking system enables changes in the system to be expressed either as changes in machine performance or as changes in sensor readings. So far as changes in sensor readings are concerned, if the changes occur predominantly in one sensor location then the probability is high that that particular sensor is at fault, whereas deterioration in machine performance will tend to reveal itself as a distribution of errors across all the sensors.

3

In the context of this specification, the "sensor error" is the difference between the true value of the quantity being measured and the output of the sensor that is doing the measuring. The overall sensor error is the sum of two contributions, namely (a) the normal sensor inaccuracy, and (b) the abnormal sensor error. Contribution (a) is present at all times, even when the sensor is functioning properly. Contribution (b) is present only when the sensor is not functioning properly, for example because it is beginning to fail or is drifting out of calibration. Generally, it is possible to estimate how large the contribution (a) will be, but it is not possible to conceive how large the contribution (b) will be. On the other hand the contribution (b) only matters when it is comparable to or much larger than the contribution (a). There will be a statistical variation of inaccuracy for a group of similar sensors, and, without more accurate calibration standards for observing the sensors, it is not possible to say what their actual inaccuracies are. All that can be said is that the inaccuracy is less than a certain amount for contribution (a).

The system according to the invention gives an estimate of the total sensor error, ie (a)+(b). By itself this system cannot determine how much of this error is due to the contribution (a) and how much is due to the contribution (b). Thus the system of the invention provides a sensor error estimation technique rather than a fault detection and isolation (FDI) technique.

To provide a full FDI system it is necessary to include extra signal processing in order to formally decide whether or not a fault has occurred and, if it has, where the fault is located. Such signal processing may be arranged to compare the estimated total error for each sensor to a corresponding threshold value, for example twice the largest expected value of the contribution (a) for that sensor, and to provide an indication that the particular sensor has failed if the estimated total error exceeds the threshold value.

According to another aspect of the present invention there is provided a method of detecting errors in the outputs of sensors monitoring a plurality of parameters of a machine, the method comprising:

(a) providing a real-time computer model of the machine receiving control signals corresponding to control signals supplied to the machine in operation and estimated machine performance variation values $\delta\mathbf{p}_{est}$, and supplying estimated sensor output values $\mathbf{y}_{est}$;

(b) producing the estimated machine performance variation values $\delta\mathbf{p}_{est}$ for supplying to the computer model;

(c) storing reference information indicative of the machine performance variation in response to hypothetical changes in the sensor output signals; and

(d) producing estimated sensor output error values $\mathbf{z}_{est}$ dependent on the estimated machine performance variation values $\delta\mathbf{p}_{est}$ and the reference information.

In order that the invention may be more fully understood, reference will now be made, by way of example, to the accompanying drawings, in which:

Figure 1 is a block diagram of a tracking system in accordance with the invention for tracking the output sensors of a gas turbine jet aero-engine;

Figure 2 is a block diagram of a preferred tracking compensator for use in the tracking system of Figure 1;

Figures 3 and 4 show graphs illustrating estimated sensor errors relative to simulated faults applied in use of the tracking system of Figure 1; and

Figure 5 shows graphs of estimated sensor errors relative to engine transients in use of the tracking system of Figure 1.

The following description will be given with reference to the tracking of output sensors of gas turbine jet aero-engines for the sake of definiteness. However it should be appreciated that similar systems may be used for tracking the sensor outputs of a wide range of machines, including shaft power gas turbines, gear pumps, automotive engine management systems and physiological systems.

**General principles of the output-sensor error estimation system**

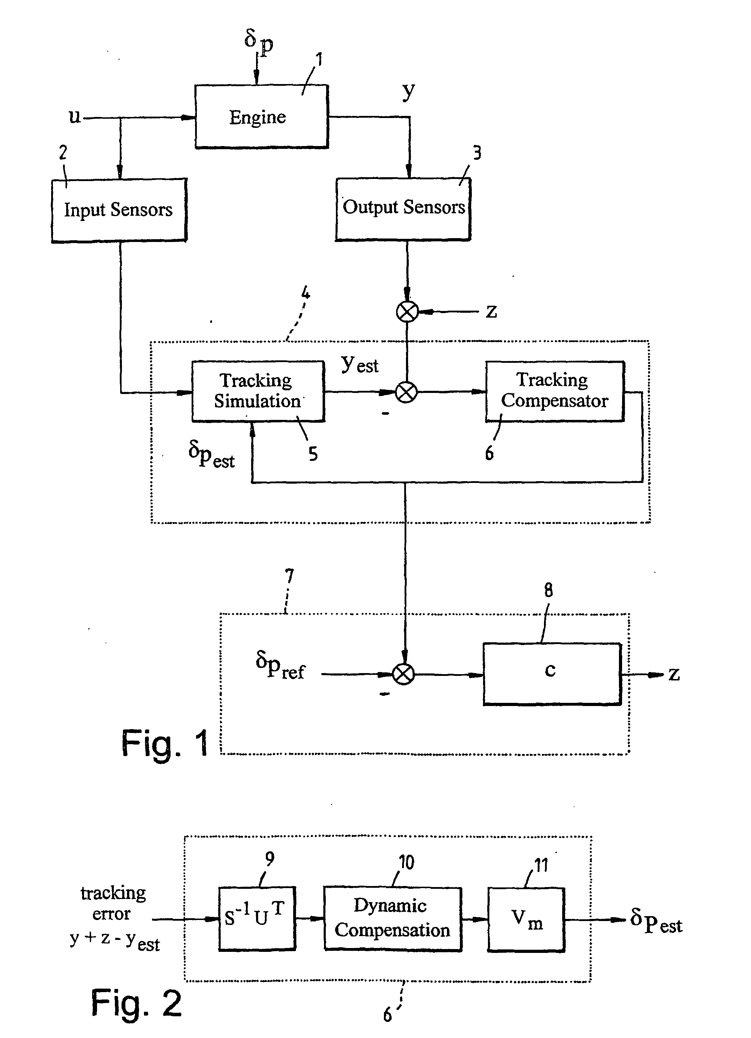

Referring to Figure 1, the gas turbine jet aero-engine 1 is provided with a plurality of input and output sensors 2 and 3, and the tracking and sensor error estimation systems are embodied in software running in real-time on a digital computer. The measurements of the engine inputs and outputs acquired by the sensors 2 and 3 are read into the computer using standard techniques.

The engine 1 has two input signals, **u** and **p.** These are vector-valued signals that normally will have several components. The input signal **u** includes control and environmental inputs (such as the fuel flow and ambient temperature) that are measured by the input sensors 2. The input signal **p** contains the engine component performance parameters (such as the efficiencies of the compressors and turbines). In the figure the vector $\delta$**p** of the differences between the actual performance parameters **p** and their nominal values used originally in the simulation is shown, rather than **p** itself. These differences will vary from one engine to the next (even among engines of the same model) due to individual profiles of wear and build. They cannot readily be measured but they can be estimated by using the tracking system 4 whose operation will now be explained. The tracking system 4 is provided to estimate $\delta$**p**, and comprises two major components, namely a tracking simulator 5 and a tracking compensator 6.

The tracking simulator 5 provides a detailed simulation model of the engine running in real time, and is supplied by the input sensors 2 with measurements of the very same control and environmental inputs that drive the real engine 1. It is a requirement of the simulation model that it should be possible to adjust its component performance parameters. The output values $\mathbf{y}_{est}$ predicted by the tracking simulation are compared with the measured output values y of the engine 1 supplied by the output sensors 3, and any difference between these values is attributed to discrepancy between the value of $\delta$**p** experienced by the real engine and its counterpart in the simulation. (For the moment, the output-sensor error z shown in Figure 1 will be ignored.)

The tracking compensator 6 provides an algorithm that uses the value of the tracking error $\mathbf{y} - \mathbf{y}_{est}$ to compute the estimated value $\delta\mathbf{p}_{est}$ of the performance parameter variation that must be applied to the simulation to force the tracking error to vanish. When the tracking error is small, the vector $\delta\mathbf{p}_{est}$ of trims applied to the simulation will, in the steady-state, provide an estimate of the deterioration vector $\delta$**p** in the performance of the real engine.

To show that this is so, **C** may be defined as the matrix of the partial derivatives of the steady-state components of y with respect to the components of **p,** with **u** held constant

$$\mathbf{C} \cong \left(\frac{\partial \mathbf{y}}{\partial \mathbf{p}}\right)_{\mathbf{u}=\text{Const.}}$$

In other words, the (i,j)th element of **C** is the derivative of the ith component of **y** with respect to the jth component of **p**. The elements of **C** would normally be computed off-line by running the simulation model to the desired steady operating point, perturbing the components of **p** one at a time, and then using formulae for numerical differentiation. Since the tracking simulation and the real engine experience the same value of **u,** then any difference between **y** and $\mathbf{y}_{est}$ can only arise because $\delta$**p** and $\delta\mathbf{p}_{est}$ are not equal. If the tracking error does vanish and the difference between $\delta$**p** and $\delta\mathbf{p}_{est}$ is small, then:

$$C(\delta p - \delta p_{est}) = 0$$

If y has the same number of components as $\delta$**p** and $\delta\mathbf{p}_{est}$, then the matrix **C** will be square. Assuming also that **C** is not singular, then the left hand side of the previous equation can be multiplied by the inverse matrix $\mathbf{C}^{-1}$ and the expression can be obtained:

$$\delta p_{est} = \delta p$$

The tracking compensator 6 is in effect a closed-loop controller that controls the output $\mathbf{y}_{est}$ of the tracking simulation by manipulating the components of $\delta\mathbf{p}_{est}$ which play the role of synthetic actuators. The requirements on the tracking compensator 6 are that the steady-state tracking error should vanish and that the tracking system as a whole should be dynamically stable. There are many techniques that can be used to design a suitable tracking compensator when y and p have the same number of components, some of which are described in J. M. Maciejowski, "Multivariable Feedback Design", Addison-Wesley 1989. A specific example, relevant to the gas turbine application, is described in J. Orme and G. Gilyard, Subsonic Flight Test Evaluation of a Propulsion System Parameter estimation Process for the F100 Engine, Paper No. AIAA-92-3745, AIAA/SAE/ASME/ASEE 28th Joint Propulsion Conference and Exhibit, July 6-8, 1992, Nashville, TN, USA. The main reason for using a closed-loop implementation is to keep the state of the tracking simulation as close as possible to that of the real engine, so that the assumption that various signals are small is valid. Also, it is well known to systems and control engineers that properly designed closed-loop schemes using negative feedback are self-correcting and less sensitive in their performance to modelling errors than open-loop schemes.

Considering now the output-sensor error **z** in Figure 1, in the steady-state condition, the tracking compensator 6 will adjust $\delta \mathbf{p}_{est}$ so that the signal presented to the input of the compensator 6 vanishes, giving:

$$C\delta p_{est} = z + C\delta p$$

An estimate $\mathbf{z}_{est}$ of the actual output-sensor error **z** is computed by a sensor error estimation system 7 from a reference signal $\delta \mathbf{p}_{ref}$ and the matrix **C** in a memory 8, as:

$$z_{est} \equiv C(\delta p_{est} - \delta p_{ref})$$

The signal $\delta \mathbf{p}_{ref}$ is a previously acquired reference value of $\delta \mathbf{p}_{est}$.

To see how good an estimate this is, we substitute in this expression the previously derived result that $\mathbf{C}\delta \mathbf{p}_{est}$ = z + $\mathbf{C}\delta \mathbf{p}$ to obtain:

$$z_{est} = z + C(\delta p - \delta p_{ref})$$

It follows that $\mathbf{z}_{est}$ will be a good estimate provided that $\delta \mathbf{p}$ does not differ much from the reference value. This will normally be the case for a gas turbine engine because such equipment characteristically degrades gracefully, with changes in the vector $\delta \mathbf{p}$ taking place slowly and being distributed fairly uniformly among its components. In cases where the engine suffers severe damage, the corresponding large change in $\delta \mathbf{p}$ is likely to be localised to a small number of its components. However, the spurious effect on $\mathbf{z}_{est}$ will normally be distributed among several components, in contrast to the most common case of failure of a single sensor, which will show up predominantly on one component of $\mathbf{z}_{est}$.

### Output-sensor error estimation when $\delta p$ has more components than y

The tracking system 4 described relies crucially on the number of output sensors used being the same as the number of deterioration components (performance parameters) to be tracked. However, in practice, there are normally more significant components of $\delta \mathbf{p}$ than there are of **y**, so that the inverse of the matrix **C** will certainly not exist. Therefore, the preferred embodiment of the invention uses a version of the tracking system that can handle the case when $\delta \mathbf{p}$ has more components than **y**.

Such a tracking system is described fully in US 6063129, and accordingly only a summary is given here. The design of the tracking compensator 6 makes use of the singular value decomposition of the matrix **C**. Suppose that y has m components and $\delta \mathbf{p}$ has n components, where m is less than n, then **C** is an m-by-n matrix having more columns than rows, and its singular value decomposition (W. H. Press, B. P. Flannery, S. A. Teukolsky and W. T. Vetterling, "Numerical Recipes in PASCAL", Cambridge University Press, 1989) is

$$C = U[S\ 0_{m,n-m}]V^T$$

In this, as in many applications of engineering mathematics, it is advisable to work in terms of normalised, non-dimensional variables that have been scaled so that typical values are comparable and not of widely differing orders of magnitude. For simplicity of exposition, it is assumed here that any such scaling has already been done and absorbed into **C**.

In this formula, **U** is a square, m-by-m orthogonal matrix (ie $\mathbf{UU}^T = \mathbf{I}_m$) and **V** is a square, n-by-n orthogonal matrix (ie $\mathbf{VV}^T = \mathbf{I}_n$). The matrix **V** can be regarded as a co-ordinate transformation that relates the components of $\delta \mathbf{p}$ expressed in the normal "engineering" frame of reference to their values $\delta \mathbf{p}'$ expressed in an "abstract" frame of reference where the transformation formulae are:

$$\delta p' = V^T \delta p \text{ and } \delta p = V\delta p'$$

S is a square, diagonal matrix whose diagonal elements are called the singular values of **C**. The symbols **I** and **0** respectively denote the identity and zero matrices of the appropriate sizes and the superscript "T" denotes the transpose of a matrix. Because of the structure of the partitioned matrix involving **S,** the last (n-m) columns of **V** make no contribution to **C** and the expression for **C** can be simplified to:

$$C = USV_m^T$$

Figure 2 shows an appropriate form of the tracking compensator 6 comprising transformation blocks 9 and 11 and a dynamic compensation block 10 having m inputs and m outputs. The dynamic compensation block 10 must be designed such that (a) the tracking system is dynamically stable and (b) its input should vanish in the steady-state condition. In order that the inverse matrix $S^{-1}$ should exist, it is also necessary that none of the singular values vanish. This will be the case if the sensors used are widely distributed in terms of their mathematical independence, as prescribed earlier.

Because y has fewer components than p, there is not enough information available to estimate $\delta\mathbf{p}$ exactly. The preferred tracking compensator 6 generates an approximate estimate by neglecting the last (n-m) components of $\delta\mathbf{p'}$ so that $\delta\mathbf{p}_{est}$ is generated from the first m components of $\delta\mathbf{p'}$ only. In the steady state, it is found that:

$$x = S^{-1}U^Tz + V_m^T\delta p$$

and hence

$$\delta p_{est} = V_m(S^{-1}U^Tz + V_m^T\delta p) = V_mS^{-1}U^Tz + V_mV_m^T\delta p$$

It will now be shown that, although the value of $\delta\mathbf{p}_{est}$ generated by the preferred embodiment of the tracking compensator 6 is an approximation, nonetheless the ability of the system to estimate the output sensor error is unaffected by this approximation. For, from the previously noted orthogonality property of the matrix **V,** it follows that

$$V_m^TV_m = I_m$$

It should be noted that the multiplication of the matrices $V_m$ and $V_m^T$ is not commutative unless m and n are equal. Whereas $\mathbf{V}_m^T\mathbf{V}_m$ equals the m-by-m identity matrix, the product $\mathbf{V}_m\mathbf{V}_m^T$ is an n-by-n matrix that approximates, but does not equal, the n-by-n identity.

As before, the estimate of sensor error is constructed as:

$$z_{est} = C(\delta p_{est} - \delta p_{ref})$$

Using previously derived results, it is found that:

$$z_{est} = USV_m^T(V_mS^{-1}U^Tz + V_mV_m^T\delta p - \delta p_{ref}) = z + C(\delta p - \delta p_{ref})$$

This is exactly the same expression as was obtained earlier for the case where the number of output sensors used is the same as the number of deterioration components (performance parameters) to be tracked. This is an important observation because it confirms that having more components in p than there are in y does not make the problem of estimating the errors in y any more difficult, provided that the preferred embodiment of the tracking system is used. Although the value of $\delta\mathbf{p}_{est}$ is necessarily approximate in this case, the approximation used has no impact on the ability of the system to estimate z.

The estimated sensor errors must be processed in real-time in order to decide whether or not an error has actually occurred and, if so, to determine which particular sensor is at fault. The simplest technique would be to define, for each individual sensor, an appropriate threshold level and to declare a fault to have occurred in that sensor if the threshold level is exceeded so that the sensor error estimation technique allows the detection and isolation processes to be effectively combined. The threshold level must be set sufficiently high to reduce the false alarm rate to an acceptably low level but not so high that the sensitivity of the system to genuine sensor error is inadequate. The appropriate threshold value would depend on (a) the magnitude and other characteristics of the normal sensor inaccuracy that is present even when the sensors are working properly, and (b) the magnitude and other characteristics of the normal degradation that could be expected to occur between successive calibrations of the sensor error estimation system. This information is application specific.

Once a sensor failure has been detected and isolated, it is necessary to decide what action should be taken. Of course, in some applications, it might be possible to immediately initiate a safe shut-down of the equipment to allow corrective action to be taken. However, this will not always be practical or desirable. Therefore, two strategies, that are supported by the tracking system, for accommodating sensor failure are outlined below, these allowing operation of the equipment to continue until a more convenient time.

The first strategy assumes that there is no duplication of the sensors. In this case, the tracking system would be reconfigured so that the tracking simulation was driven by the reduced set of good sensors, excluding the faulty sensor. In this case an estimate of the variable which had formerly been measured by the failed sensor could be extracted from the tracking simulation and used in place of the measurement.

The second strategy assumes that there is duplication of sensors but that, at any one time, only one sensor is active, the others being on stand-by. If the currently active sensor fails, then its output is ignored and a fresh sensor is taken from stand-by mode to active mode. The health of the new sensor can be monitored in exactly the same way as before. Although this strategy requires redundancy of sensors, it is a passive redundancy which may be superior to active redundancy (in which all of the redundant sensors are active all of the time) because the lives of the sensors on stand-by are not being consumed so rapidly.

**Experimental Results**

The output sensor error estimation system 7 described was tested on a Rolls-Royce Spey Mk202 two-shaft turbofan aero-engine. The engine was installed on the sea-level static engine test bed at Pyestock site of the UK's Defence Evaluation and Research Agency. The tests were carried out as part of a wider series of engine runs that took place in February-March 2000. The engine was operated "dry" (that is without reheat - also known as afterburning ) at a fairly high power level with the high-pressure shaft speed (NH) being kept between 88% and 93% of its maximum value. Closed-loop control was used, with the measured value of NH being used to regulate the fuel flow and with the inlet guide vane angles and the variable geometry nozzle area being scheduled as functions of NH.

There were twelve engine component performance parameters of interest (ie the components of **p**) which are listed in Table 1.

| I D No. | Engine component performance parameter |
|---------|----------------------------------------|
|         |                                        |
| 1 | Efficiency of low pressure compressor (inner part) |
| 2 | Efficiency of low pressure compressor (outer part) |
| 3 | Efficiency of high pressure compressor |
| 4 | Efficiency of high pressure turbine |
| 5 | Efficiency of low pressure turbine |
|   |   |
| 6 | flow function of low pressure compressor |
| 7 | flow function of high pressure compressor |
| 8 | flow function of high pressure turbine |
| 9 | flow function of low pressure turbine |
|   |   |
| 10 | high pressure shaft power off-take |

(continued)

| I D No. | Engine component performance parameter |
|---------|------------------------------------------|
| 1 | anti-icing bleed |
| 1 | |
| 1 | combustion efficiency |
| 2 | |

Table 1:

| Engine component performance parameters | | |
|---|---|---|
| The tracking system used ten measured outputs, which are listed in Table 2. | | |
| I D No. | Name of output | Abbreviation /Unit |
| | | |
| 1 | Low pressure shaft speed | NL % |
| 2 | High Pressure shaft speed | NH % |
| 3 | High pressure compressor inlet temperature | T2C °K |
| 4 | Bypass duct inlet differential pressure | DP2B kPa |
| 5 | Bypass duct inlet temperature | T2B °K |
| 6 | High pressure compressor exit total pressure | P3 kPa |
| 7 | High pressure compressor exit temperature | T3 °K |
| 8 | Core exit mean temperature | T6 °K |
| 9 | High pressure compressor exit differential pressure | DP3 kPa |
| 1 0 | High pressure turbine stage 2 static pressure | PS4 kPa |

**Table 2: List of measured outputs used in the engine trials**

There were various practical implementation issues of both the tracking and the output sensor error estimation systems that needed to be dealt with. These were issues of the kind familiar to systems and control engineers and have no bearing on the principles of the error estimation system. The most important implementation issue was that gain-scheduling was used to take account of the changes in the dynamics of the engine as the operating point was varied.

A preliminary set of measurements was taken with the tracking system engaged, in order to acquire the components of $\delta\mathbf{p}_{ref}$. These were found to depend on NH, so $\delta\mathbf{p}_{ref}$ too was scheduled as a function of NH, with linear interpolation being used between the measured points.

During the experiments, output sensor faults were simulated by adding signals to the values of the measured outputs presented to the tracking system. For reasons of safety, this deliberate corruption of the measured outputs took place only within the part of the engine control computer system that was running the tracking system. The uncorrupted outputs were used for controlling the engine.

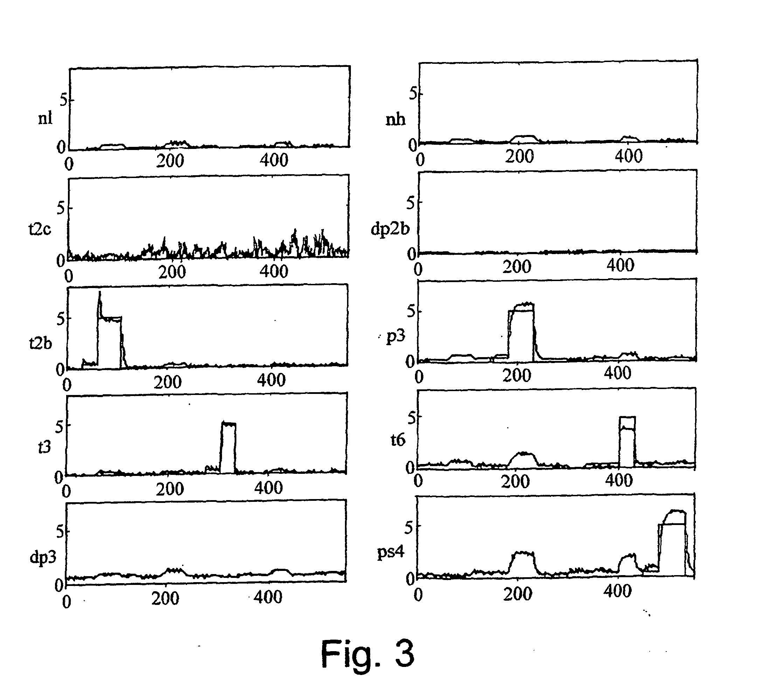

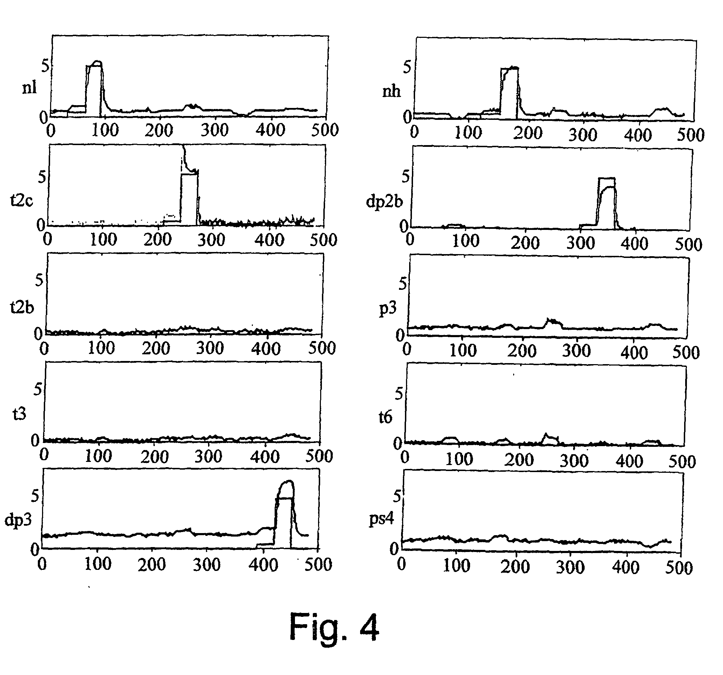

Sample experimental results are shown in Figures 3, 4 and 5. Figure 3 shows, for each of the output sensors, a graph of the estimated output sensor error (measured in standard deviations) and the simulated sensor fault (where appropriate) against time elapsed in seconds with simulated faults applied, one at a time, to the output sensors T2B, P3, T3, T6 and PS4. Figure 4 shows, for each of the output sensors, a graph of the estimated output sensor error and the simulated sensor fault (where appropriate) against time elapsed in seconds with simulated faults applied, one at a time, to the output sensors NL, NH, T2C, DP2B and DP3.

In Figures 3 and 4, the engine was kept at a constant operating point of NH = 90%. Simulated faults were applied to each sensor in turn, one at a time. To allow a more meaningful comparison of the results obtained for different outputs, the values of simulated and estimated output-sensor errors have been non-dimensionalised and scaled by dividing by the estimated root mean square value of the normal sensor inaccuracy. A simulated sensor error of 0.5 standard deviations was applied to each output sensor in turn, increasing to 5 standard deviations after a few seconds. It is seen in the figures that (unsurprisingly) the smaller applied error is difficult to discern, but the larger error is picked up clearly with, in most cases, little spurious coupling into 'off-axis' estimates.

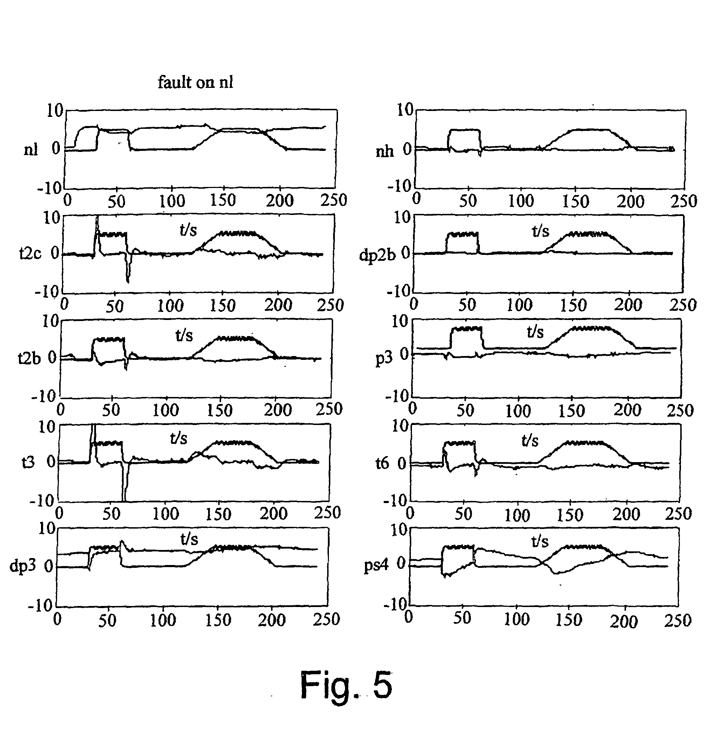

Most of the discussion in the previous sections has related to the steady-state performance of the system. However, the system was also tested under transient conditions in which the engine was accelerated and decelerated between NH = 88% and NH = 93%. Sample results for all the output sensors are shown in Figure 5 for the case of a simulated fault applied to the NL sensor. A simulated fault of five standard deviations was applied after 10 seconds. As well as showing the estimated output sensor errors, the graphs in Figure 5 show the engine speed relative to its initial value of NH = 88%. Ideally, the error curve for the sensor NL would start to rise from zero to five standard deviations after 10 seconds, whereas the error curves for the other nine sensors would stay on zero all the time. Broadly speaking, this is what was observed, with the following exceptions (which are also observed to a greater or lesser extent in Figures 3 and 4).

• The estimated errors on the temperature sensors showed relatively large transient spikes during the periods of engine acceleration and deceleration. These arose because the temperature sensors had response times that were rather long in comparison with that of the tracking system. The spikes could be reduced by using more responsive temperature sensors or by using a slower tracking system. In either case, the spurious transients were not the result of any inherent limitation in the error estimation system.

• The response of the estimated error on the PS4 sensor measurement showed spurious, slow transients. The PS4 sensor measures the (static) pressure partway through the high-pressure turbine. Whilst the characteristics of the complete turbine were known, those of the individual stages were not and it was only possible to include the PS4 sensor in the simulation model by making some guesses about how the overall characteristics should be split up. It is believed that the strange behaviour observed for the PS4 sensor is due to the simulation model being incorrect and not to any limitation in either the tracking system or the output sensor error estimation technique.

• The background level of the estimated error for the DP3 sensor was observed to drift up and down during the experiments and was frequently much bigger than for the remaining nine sensors. Following the end of the trials, the DP3 sensor was independently found to be faulty and was replaced. It is now believed that the results obtained for the DP3 sensors were showing the early signs of a genuine sensor error.

A similar technique could also be used to provide estimated errors for the input sensors 2. Suppose there was an additive error **w** on top of the true values u measured by the input sensors. Then the total control and environmental input entering the tracking simulator 5 would not be u, but **u+w** instead.

Now define the matrix **C$_u$** by

$$C_u \equiv \left( \frac{\partial \mathbf{y}}{\partial \mathbf{u}} \right)_{p=Const.}$$

If **w** was small, then the output of the tracking simulator 5 would be reduced by **C$_u$w**. The value of $\delta \mathbf{p}_{est}$ would change to

$$\delta p_{est} = V_m S^{-1} UT(z - C_u w) + V_m V_m^T \delta p$$

If p is defined by:

$$\rho \equiv C (\delta p_{est} - \delta p_{ref})$$

then we find that

$$\rho = (z - C_u w) + C(\delta p - \delta p_{ref})$$

so that, if the output sensor error estimation technique were to be applied without modification in the presence of significant input sensor error, the estimate would not be **z,** but **z-C$_u$w**.

If it safe to assume that the gas turbine engine (or other machine) does, in fact, degrade gracefully so that $\delta$**p** is close to $\delta$**p**$_{ref}$, then $\rho$ could be used as an estimate for **z-C$_u$w**. If $\rho$ had any big components, it could reasonably be assumed that a sensor fault had occurred in either **u** or **y** but it could not be said with confidence which measurements of the components of **u** or **y** were at fault. To see why this is so, recall that y has m components and suppose that **u** has n$_u$ components. Then, the approximate result

$$\rho \cong (z - C_u w)$$

would provide only m equations to determine n$_n$+m equations, which cannot be solved exactly. However an approximate solution can be obtained using the singular value decomposition technique. First rewrite the equations as:

$$\rho \cong \begin{bmatrix} \mathbf{I_m} & -\mathbf{C_u} \end{bmatrix} \begin{bmatrix} \mathbf{z} \\ \mathbf{w} \end{bmatrix}$$

Then form the singular value decomposition:

$$[I_m - C_u] = \overline{USV}_m^{\mathsf{T}}$$

Approximate solutions for **z** and **w** can then be found as:

$$\begin{bmatrix} \mathbf{z} \\ \mathbf{w} \end{bmatrix} \cong \overline{\mathbf{V}}_m \overline{\mathbf{S}}^{-1} \overline{\mathbf{U}}^{\mathsf{T}} \rho$$

Whether or not this approximate solution is good enough to give useful information would have to be assessed in individual cases.

## Claims

1.  A tracking system for detecting errors in the outputs of sensors monitoring a plurality of parameters of a machine, the system comprising:

    (a) simulation means providing a real-time computer model of the machine having control inputs for receiving control signals corresponding to control signals supplied to the machine in operation, and outputs for supplying estimated sensor output values **y**$_{est}$;

    (b) compensating means for producing estimated machine performance variation values $\delta$**p**$_{est}$ for supplying to the simulation means;

    (c) memory means containing reference information indicative of the machine performance variation in response to hypothetical changes in the sensor output signals; and

    (d) sensor error estimating means for producing estimated sensor output error values **z**$_{est}$ in dependence on the estimated machine performance variation values $\delta$**p**$_{est}$ and the reference information.

2.  A tracking system according to claim 1, wherein control means is provided for supplying the estimated sensor output error values **z**$_{est}$, the sensor output values y and the estimated sensor output values **y**$_{est}$ to the compensating means to control the estimated machine performance variation values $\delta$**p**$_{est}$ so as to cause the estimated sensor

output values $\mathbf{y}_{est}$ to follow the actual sensor output values y of the machine sensors.

3. A tracking system according to claim 1 or 2, wherein the reference information in the memory means comprises reference machine performance variation values $\delta\mathbf{p}_{ref}$ and sensitivity coefficients **C** relating hypothetical changes in the sensor output signals to machine performance variation.

4. A tracking system according to claim 3, wherein the sensor error estimating means produces the estimated sensor output error values $\mathbf{z}_{est}$ in dependence on the differences between the reference machine performance variation values $\delta\mathbf{p}_{ref}$ and the estimated machine performance variation values $\delta\mathbf{p}_{est}$ and further dependent on the sensitivity coefficients **C.**

5. A tracking system according to claim 3 or 4, for use in monitoring a number of performance parameters of a machine utilising a lesser number of sensors, wherein the sensitivity coefficients are in the form of a non-square matrix C, and the sensor error estimating means is arranged to calculate the pseudoinverse of the matrix C to produce the estimated sensor output error values $\mathbf{z}_{est}$.

6. A tracking system according to any preceding claim, wherein the sensor error estimating means is arranged to apply singular value decomposition to produce the estimated sensor output error values $\mathbf{z}_{est}$.

7. A tracking system according to any preceding claim, wherein sensor failure detection and isolation means is provided for detecting sensor failure by comparing the estimated sensor output error values $\mathbf{z}_{est}$ to threshold values.

8. A method of detecting errors in the outputs of sensors monitoring a plurality of parameters of a machine, the method comprising:

    (a) providing a real-time computer model of the machine receiving control signals corresponding to control signals supplied to the machine in operation and estimated machine performance variation values $\delta\mathbf{p}_{est}$, and supplying estimated sensor output values $\mathbf{y}_{est}$;

    (b) producing the estimated machine performance variation values $\delta\mathbf{p}_{est}$ for supplying to the computer model;

    (c) storing reference information indicative of the machine performance variation in response to hypothetical changes in the sensor output signals; and

    (d) producing estimated sensor output error values $\mathbf{z}_{est}$ dependent on the estimated machine performance variation values $\delta\mathbf{p}_{est}$ and the reference information.

9. A method according to claim 8, further comprising supplying the estimated sensor output error values $\mathbf{z}_{est}$, the sensor output values $\mathbf{y}$ and the estimated sensor output values $\mathbf{y}_{est}$ to control the estimated machine performance variation values $\delta\mathbf{p}_{est}$ so as to cause the estimated sensor output values $\mathbf{y}_{est}$ to follow the actual sensor output values y of the machine sensors.

10. A method according to claim 8 or 9, wherein the reference information comprises reference machine performance variation values $\delta\mathbf{p}_{ref}$ and sensitivity coefficients C relating machine performance variation to hypothetical changes in the sensor output signals.

11. A method according to claim 10, wherein the estimated sensor output error values $\mathbf{z}_{est}$ are produced in dependence on the differences between the reference machine performance variation values $\delta\mathbf{p}_{ref}$ and the estimated machine performance variation values $\delta\mathbf{p}_{est}$, as well as in dependence on the sensitivity coefficients **C.**

12. A method according to claim 10 or 11, wherein the sensitivity coefficients **C** are computed by running the simulation model to a desired steady operating point, perturbing the parameters one at a time and determining the resulting machine performance variation values.

**Patentansprüche**

1. Verfolgungssystem, um Fehler in den Ausgaben von Sensoren zu erfassen, die mehrere Parameter einer Maschine überwachen, wobei das System umfasst:

(a) Simulationsmittel, die ein Echtzeit-Computermodell der Maschine schaffen, die Steuereingänge, um Steuersignale zu empfangen, die den der Maschine im Betrieb zugeführten Steuersignalen entsprechen, und Ausgänge, um geschätzte Sensorausgabewerte $\mathbf{y}_{est}$ zu liefern, besitzen;

(b) Kompensationsmittel, die geschätzte Werte $\delta\mathbf{p}_{est}$ der Variation der Maschinenleistung erzeugen, um sie den Simulationsmitteln zuzuführen;

(c) Speichermittel, die Referenzinformationen enthalten, die die Variation der Maschinenleistung in Reaktion auf hypothetische Änderungen der Sensorausgabesignale angeben; und

(d) Sensorfehler-Schätzmittel, die geschätzte Sensorausgabe-Fehlerwerte $\mathbf{z}_{est}$ in Abhängigkeit von den geschätzten Werten $\delta\mathbf{p}_{est}$ der Variation der Maschinenleistung und den Referenzinformationen erzeugen.

2. Verfolgungssystem nach Anspruch 1, wobei Steuermittel vorgesehen sind, um geschätzte Sensorausgabe-Fehlerwerte $\mathbf{z}_{est}$, die Sensorausgabewerte $\mathbf{y}$ und die geschätzte Sensorausgabewerte $\mathbf{y}_{est}$ an die Kompensationsmittel zu liefern, um die geschätzten Werte $\delta\mathbf{p}_{est}$ der Variation der Maschinenleistung zu steuern, um zu bewirken, dass die geschätzten Sensorausgabewerte $\mathbf{y}_{est}$ den tatsächlichen Sensorausgabewerten $\mathbf{y}$ der Maschinensensoren folgen.

3. Verfolgungssystem nach Anspruch 1 oder 2, wobei die Referenzinformationen in den Speichermitteln die Referenzwerte $\delta\mathbf{p}_{ref}$ der Variation der Maschinenleistung und die Empfindlichkeitskoeffizienten C, die hypothetische Änderungen in den Sensorausgabesignalen mit der Variation der Maschinenleistung in Beziehung setzen, umfassen.

4. Verfolgungssystem nach Anspruch 3, wobei die Sensorfehler-Schätzmittel die geschätzten Sensorausgabe-Fehlerwerte $\mathbf{z}_{est}$ in Abhängigkeit von den Differenzen zwischen den Referenzwerten $\delta\mathbf{p}_{ref}$ der Variation der Maschinenleistung und den geschätzten Werten $\delta\mathbf{p}_{est}$ der Variation der Maschinenleistung und ferner in Abhängigkeit von den Empfindlichkeitskoeffizienten **C** erzeugen.

5. Verfolgungssystem nach Anspruch 3 oder 4 für die Verwendung bei der Überwachung einer Anzahl von Leistungsparametern einer Maschine unter Verwendung einer kleineren Anzahl von Sensoren, wobei die Empfindlichkeitskoeffizienten in der Form einer nicht quadratischen Matrix **C** vorliegen und die Sensorfehler-Schätzmittel beschaffen sind, um die Pseudoinverse der Matrix **C** zu berechnen, um die geschätzten Sensorausgabe-Fehlerwerte $\mathbf{z}_{est}$ zu erzeugen.

6. Verfolgungssystem nach einem vorhergehenden Anspruch, wobei die Sensorfehler-Schätzmittel beschaffen sind, um die Zerlegung nach singulären Werten anzuwenden, um die geschätzten Sensorausgabe-Fehlerwerte $\mathbf{z}_{est}$ zu erzeugen.

7. Verfolgungssystem nach einem vorhergehenden Anspruch, wobei Sensorfehler-Erfassungsmittel und -Isolationsmittel vorgesehen sind, um einen Sensorausfall durch das Vergleichen der geschätzten Sensorausgabe-Fehlerwerte $\mathbf{z}_{est}$ mit Schwellenwerten zu erfassen.

8. Verfahren zum Erfassen von Fehlern in den Ausgaben von Sensoren, die mehrere Parameter einer Maschine überwachen, wobei das Verfahren umfasst:

(a) Schaffen eines Echtzeit-Computermodells der Maschine, das Steuersignale, die den Steuersignalen entsprechen, die der Maschine im Betrieb zugeführt werden, und geschätzte Werte $\delta\mathbf{p}_{est}$ der Variation der Maschinenleistung empfängt und geschätzte Sensorausgabewerte $\mathbf{y}_{est}$ liefert;

(b) Erzeugen der geschätzten Werte $\delta\mathbf{p}_{est}$ der Variation der Maschinenleistung, um sie dem Computer-Modell zuzuführen;

(c) Speichern der Referenzinformationen, die die Variation der Maschinenleistung in Reaktion auf hypothetische Änderungen der Sensorausgabesignale angeben; und

(d) Erzeugen geschätzter Sensorausgabe-Fehlerwerte $\mathbf{z}_{est}$ in Abhängigkeit von den geschätzten Werten $\delta\mathbf{p}_{est}$ der Variation der Maschinenleistung und den Referenzinformationen.

9. Verfahren nach Anspruch 8, wobei das Verfahren ferner das Liefern der geschätzten Sensorausgabe-Fehlerwerte $\mathbf{z}_{est}$, der Sensorausgabewerte $\mathbf{y}$ und der geschätzten Sensorausgabewerte $\mathbf{y}_{est}$ umfasst, um die geschätzten Werte $\delta\mathbf{p}_{est}$ der Variation der Maschinenleistung zu steuern, um zu bewirken, dass die geschätzten Sensorausgabewerte

$\mathbf{y}_{est}$ den tatsächlichen Sensorausgabewerten $\mathbf{y}$ der Maschinensensoren folgen.

10. Verfahren nach Anspruch 8 oder 9, wobei die Referenzinformationen die Referenzwerte $\delta\mathbf{p}_{ref}$ der Variation der Maschinenleistung und die Empfindlichkeitskoeffizienten **C,** die die Variation der Maschinenleistung mit hypothetischen Änderungen in den Sensorausgabesignalen in Beziehung setzen, umfassen.

11. Verfahren nach Anspruch 10, wobei die geschätzten Sensorausgabe-Fehlerwerte $\mathbf{z}_{est}$ sowohl in Abhängigkeit von den Differenzen zwischen den Referenzwerten $\delta\mathbf{p}_{ref}$ der Variation der Maschinenleistung und den geschätzten Werten $\delta\mathbf{p}_{est}$ der Variation der Maschinenleistung als auch in Abhängigkeit von den Empfindlichkeitskoeffizienten **C** erzeugt werden.

12. Verfahren nach Anspruch 10 oder 11, wobei die Empfindlichkeitskoeffizienten **C** berechnet werden, indem das Simulationsmodell zu einem gewünschten stationären Arbeitspunkt ausgeführt wird, die Parameter einzelnen gestört werden und die resultierenden Werte der Variation der Maschinenleistung bestimmt werden.

## Revendications

1. Système de poursuite pour détecter des erreurs dans les sorties de capteurs contrôlant une pluralité de paramètres d'une machine, le système comprenant :

   (a) des moyens de simulation fournissant un modèle de calculateur en temps réel de la machine comprenant des entrées de commande pour recevoir des signaux de commande correspondant aux signaux de commande fournis à la machine en fonctionnement, et des sorties pour fournir des valeurs de sortie de capteur estimées $y_{est}$ ;
   (b) des moyens de compensation pour produire des valeurs de variation de performance de machine estimées $\delta p_{est}$ à fournir aux moyens de simulation ;
   (c) des moyens formant mémoire contenant des informations de référence indicatrices de la variation de performance de la machine en réponse à des changements hypothétiques dans les signaux de sortie de capteur ; et
   (d) des moyens d'estimation d'erreur de capteur pour produire des valeurs d'erreur de sortie de capteur estimées $z_{est}$ en fonction des valeurs de variation de performance de la machine estimées $\delta p_{est}$ et des informations de référence.

2. Système de poursuite selon la revendication 1, dans lequel les moyens de commande sont prévus pour fournir les valeurs d'erreur de sortie de capteur estimées $z_{est}$, les valeurs de sortie de capteur $y$ et les valeurs de sortie de capteur estimées $y_{est}$ aux moyens de compensation pour commander les valeurs de variation de performance de machine estimées $\delta p_{est}$ de manière à amener les valeurs de sortie de capteur estimées $y_{est}$ à suivre les valeurs de sortie de capteur réelles $y$ des capteurs de machine.

3. Système de poursuite selon la revendication 1 ou 2, dans lequel les informations de référence dans les moyens formant mémoire comprennent des valeurs de variation de performance de machine de référence $\delta préf$ et des coefficients de sensibilité C liant des changements hypothétiques dans les signaux de sortie de capteur à une variation de performance de machine.

4. Système de poursuite selon la revendication 3, dans lequel les moyens d'estimation d'erreur de capteur produisent les valeurs d'erreur de sortie de capteur estimées $z_{est}$ en fonction des différences entre les valeurs de variation de performance de machine de référence $\delta p_{réf}$ et les valeurs de variation de performance de machine estimées $\delta p_{est}$ et en fonction en outre des coefficients de sensibilité C.

5. Système de poursuite selon la revendication 3 ou 4, destiné à être utilisé dans le contrôle d'un nombre de paramètres de performance d'une machine utilisant un moins grand nombre de capteurs, dans lequel les coefficients de sensibilité sont sous la forme d'une matrice non carrée C, et les moyens d'estimation d'erreur de capteur sont agencés pour calculer la pseudo-inversion de la matrice C pour produire les valeurs d'erreur de sortie de capteur estimées $z_{est}$.

6. Système de poursuite selon l'une quelconque des revendications précédentes, dans lequel les moyens d'estimation d'erreur de capteur sont agencés pour appliquer une décomposition en valeurs singulières pour produire les valeurs d'erreur de sortie de capteur estimées $z_{est}$.

**7.** Système de poursuite selon l'une quelconque des revendications précédentes, dans lequel des moyens de détection et d'isolement de panne de capteur sont prévus pour détecter une panne de capteur en comparant les valeurs d'erreur de sortie de capteur estimées $z_{est}$ à des valeurs seuil.

**8.** Procédé de détection d'erreurs dans les sorties de capteurs contrôlant une pluralité de paramètres d'une machine, le procédé comprenant les étapes consistant à :

(a) fournir un modèle de calculateur en temps réel de la machine recevant les signaux de commande correspondant aux signaux de commande fournis à la machine en fonctionnement et des valeurs de variation de performance de machine estimées $\delta p_{est}$, et fournir des valeurs de sortie de capteur estimées $y_{est}$ ;
(b) produire les valeurs de variation de performance de machine estimées $\delta p_{est}$ à fournir au modèle de calculateur ;
(c) stocker des informations de référence indicatrices de la variation de performance de la machine en réponse à des changements hypothétiques dans les signaux de sortie de capteur ; et
(d) produire des valeurs d'erreur de capteur estimées $z_{est}$ en fonction des valeurs de variation de performance de la machine estimées $\delta p_{est}$ et des informations de référence.

**9.** Procédé selon la revendication 8, comprenant en outre l'étape consistant à fournir les valeurs d'erreur de sortie de capteur estimées $z_{est}$, les valeurs de sortie de capteur y et les valeurs de sortie de capteur estimées $y_{est}$ pour commander les valeurs de variation de performance de machine estimées $\delta p_{est}$, de manière à amener les valeurs de sortie de capteur estimées $y_{est}$ à suivre les valeurs de sortie de capteur réelles y des capteurs de machine.

**10.** Procédé selon la revendication 8 ou 9, dans lequel les informations de référence comprennent des valeurs de variation de performance de machine de référence $\delta p_{réf}$ et des coefficients de sensibilité C liant une variation de performance de machine à des changements hypothétiques dans les signaux de sortie de capteur.

**11.** Procédé selon la revendication 10, dans lequel les valeurs d'erreur de sortie de capteur estimées $z_{est}$ sont produites en fonction des différences entre les valeurs de variation de performance de machine de référence $\delta p_{réf}$ et les valeurs de variation de performance de machine estimées $\delta p_{est}$, ainsi qu'en fonction des coefficients de sensibilité C.

**12.** Procédé selon la revendication 10 ou 11, dans lequel les coefficients de sensibilité C sont calculés en exécutant le modèle de simulation à un point de fonctionnement stable souhaité, en perturbant les paramètres un par un et en déterminant les valeurs de variation de performance de machine résultants.

EP 1 342 134 B1

Fig. 1

Fig. 2

16

Fig. 3

Fig. 4

Fig. 5